# EUROPEAN PATENT APPLICATION

(11) **EP 4 606 200 A1**
(43) Date of publication of application: **27.08.2025**
(21) Application number: 25155131.3
(22) Date of filing: 31.01.2025
(51) Int. Cl.: A01D 34/00, A01D 34/64, A01D 34/78

(54) **LAWN MOWER WITH CRUISE SPEED DEPENDENT ADAPTIVE MOWING BLADE SPEED CONTROL AND CORRESPONDING CONTROL METHOD**

(30) Priority: 20.02.2024 US 202418581764
(71) Applicant: Kawasaki Motors, Ltd., Akashi, Hyogo 673-8666 (JP)
(72) Inventor: OBAYASHI, Kosuke, Hyogo, 650-8670 (JP); DOI, Yusuke, Hyogo, 650-8670 (JP)
(74) Representative: Betten & Resch

(57) **Abstract**

The present invention relates to a lawn mower (1) including a vehicle main body (3), a traveling motor (9) provided in the vehicle main body, the traveling motor being configured to drive a traveling drive wheel (4) and a mowing-blade motor (15) provided in the vehicle main body, the mowing-blade motor being configured to rotationally drive a mowing-blade (14) for lawn mowing. The mower also includes an upper limit value output unit (13c) configured to output an upper limit value (L1, L2, L3) of a mowing-blade rotation speed (R0, R1, R2, R3). The upper limit value output unit outputs the upper limit value of the mowing-blade rotation speed lower as the moving speed (V1, V2, V3) of the lawn mower decreases. Thereby, it is possible to reduce power consumption while retaining an efficient cutting quality.

## Description

### BACKGROUND

### Technical Field

The present disclosure relates to a lawn mower and a control device and display system of the lawn mower.

### Background Art

U.S. Patent No. 9890800 discloses a riding-type lawn mower using an engine as a drive source of a drive wheel and a drive source of a lawn mowing mechanism.

### SUMMARY

In a riding-type lawn mower using a motor as a drive source for driving a drive wheel and a drive source for rotationally driving a mowing-blade for lawn mowing, it is desirable to prevent an influence on lawn mowing quality and reduce unnecessary power consumption due to the mowing-blade rotation.

An object of the present disclosure is to prevent influence on lawn mowing quality and reduce unnecessary energy consumption due to mowing-blade rotation.

In order to achieve the above object, the present disclosure provides a lawn mower including: a vehicle main body; a traveling motor provided in the vehicle main body, the traveling motor being configured to drive a traveling drive wheel; a mowing-blade motor provided in the vehicle main body, the mowing-blade motor being configured to rotationally drive a mowing-blade for lawn mowing; and an upper limit value output unit configured to output an upper limit value of a mowing-blade rotation speed. The upper limit value output unit outputs an upper limit value of a mowing-blade rotation speed lower as the moving speed of the vehicle main body, in other words, the lawn mower is lower.

According to the present disclosure, when the moving speed of the lawn mower decreases, the upper limit value of the mowing-blade rotation speed is output lower than when the moving speed is high. Accordingly, it is easy to adjust the mowing-blade rotation speed to be the upper limit value or less. Since the upper limit value of the mowing-blade rotation speed is output low when the moving speed is low, it is possible to prevent the mowing-blade rotation speed from being excessively rotated at a high speed in a situation where the moving speed is low. This can prevent influence on lawn mowing quality and reduce unnecessary energy consumption due to mowing-blade rotation.

The present disclosure also provides a control device of a lawn mower including: a mowing-blade drive source configured to rotationally drive a mowing-blade for lawn mowing; and a controller including an upper limit value output unit configured to output an upper limit value of a mowing-blade rotation speed, the controller being configured to control the mowing-blade drive source. The controller controls the mowing-blade drive source so that an upper limit value of a mowing-blade rotation speed is lower as the moving speed of a lawn mower is lower based on an upper limit value of a mowing-blade rotation speed output by the upper limit value output unit.

According to the present disclosure, the mowing-blade drive source is controlled based on the upper limit value of the mowing-blade rotation speed so that the lower the moving speed of the lawn mower, the lower the upper limit value of the mowing-blade rotation speed. Therefore, the mowing-blade rotation speed can be easily adjusted to be the upper limit value or less. Since the upper limit value of the mowing-blade rotation speed is set to be low when the moving speed is low, it is possible to prevent the mowing-blade rotation speed from excessive rotation at a high speed in a situation where the moving speed is low. This can prevent influence on lawn mowing quality and reduce unnecessary energy consumption due to mowing-blade rotation.

The present disclosure also provides a display system of a lawn mower including: a display device configured to display information to a driver; and a controller including an upper limit value output unit configured to output an upper limit value of a mowing-blade rotation speed, the controller being configured to control the display device. The controller controls the display device so that an upper limit value of a mowing-blade rotation speed is lower as the moving speed of a lawn mower is lower based on an upper limit value of a mowing-blade rotation speed output by the upper limit value output unit.

According to the present disclosure, the display device is controlled based on the upper limit value of the mowing-blade rotation speed so that the lower the moving speed of the lawn mower, the lower the upper limit value of the mowing-blade rotation speed. Therefore, the mowing-blade rotation speed can be easily adjusted to be the upper limit value or less. Since the upper limit value of the mowing-blade rotation speed is set to be low when the moving speed is low, it is possible to prevent the mowing-blade rotation speed from excessive rotation at a high speed in a situation where the moving speed is low. This can prevent influence on lawn mowing quality and reduce unnecessary energy consumption due to mowing-blade rotation.

### BRIEF DESCRIPTION OF DRAWINGS

The foregoing and the other features of the present disclosure will become apparent from the following description and drawings of an illustrative embodiment of the disclosure in which:
Fig. 1 is a schematic side view of a lawn mower according to an embodiment of the present disclosure;
Fig. 2 is a block diagram showing the configuration of the lawn mower;
Fig. 3 is a graph showing a relationship between a moving speed and a mowing-blade rotation speed upper limit value;
Fig. 4 is a diagram showing a relationship between a moving speed and a work area;
Fig. 5 is a control flow diagram of the lawn mower;
Fig. 6 is a graph showing a modification of the mowing-blade rotation speed upper limit value;
Fig. 7 is a control flow diagram of the lawn mower when the mowing-blade rotation speed upper limit value is corrected; and
Fig. 8 is a graph showing the relationship between the moving speed, and the mowing-blade rotation speed upper limit value and the mowing-blade rotation speed lower limit value.

### DETAILED DESCRIPTION

Hereinafter, a lawn mower according to an embodiment of the present disclosure will be described with reference to the accompanying drawings.

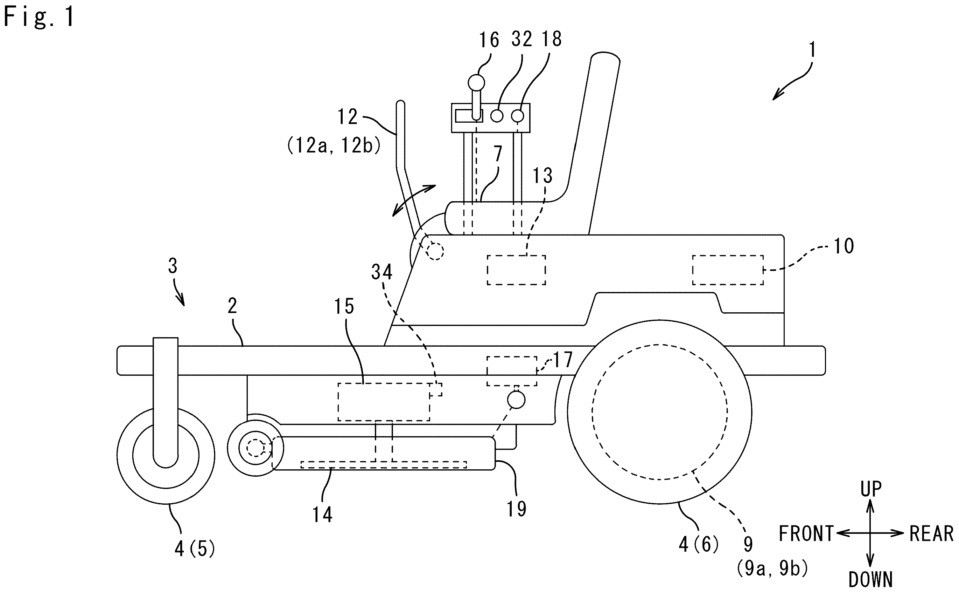

Fig. 1 is a schematic side view of a lawn mower according to an embodiment of the present disclosure. The lawn mower 1 shown in Fig. 1 is a riding-type electric lawn mower that a driver rides and operates. It should be noted that, in the present specification, "front", "rear", "left", and "right" refer to a front direction, a rear direction, a left direction, and a right direction as viewed from a driver riding on the lawn mower 1.

The lawn mower 1 includes a vehicle main body 3 having a vehicle body frame 2 extending in the front-rear direction. The vehicle main body 3 includes wheels 4 at each of the front portion and the rear portion of the vehicle body frame 2. The wheels 4 include left and right front wheels 5 and left and right rear wheels 6.

The lawn mower 1 includes traveling motors 9 as a traveling drive source. The traveling motors 9 rotationally drive the left and right rear wheels 6 which are traveling drive wheels. The traveling motors 9 include a left traveling motor 9a and a right traveling motor 9b which independently rotationally drive the left rear wheel and the right rear wheel, respectively. Each of the traveling motors 9a and 9b is supported by the vehicle body frame 2.

The lawn mower 1 includes a mowing blade 14 for lawn mowing and a mowing-blade motor 15 as a mowing-blade drive source that rotationally drives the mowing blade 14. The mowing-blade motor 15 is provided independently of the traveling motor 9 and supported by the vehicle body frame 2. The mowing blade 14 for lawn mowing is rotatably supported by the vehicle body frame 2 and disposed below the vehicle body frame 2. The mowing blade 14 for lawn mowing is arranged between the front and rear wheels 5 and 6.

The lawn mower 1 includes an operation seat 7 on which the driver sits and operates. The operation seat 7 is disposed between the front wheel 5 and the rear wheel 6.

The lawn mower 1 includes a battery 10 that stores power. The battery 10 supplies the stored power to each of the traveling motors 9a and 9b and the mowing-blade motor 15. In the present embodiment, the traveling motors 9 and the mowing-blade motor 15 are AC motors, and each includes an inverter that converts power supplied from the battery 10 into drivable AC power.

The lawn mower 1 includes a controller 13 that controls the rotation speed of each of the traveling motors 9a and 9b and the mowing-blade motor 15. The controller 13 outputs a motor command value for controlling each of the motors 9a, 9b, and 15 according to a predetermined control logic. Each motor is controlled by transmitting a motor command value for each motor to each motor, specifically, an inverter corresponding to each motor. The controller 13 may include a memory and a processing circuit, and the processing circuit may output a motor command value by reading a control program recorded in advance from the memory and executing the control program based on a sensor value provided to the processing circuit. As described below, the controller 13 controls the mowing-blade motor 15 so that the lower the moving speed of the lawn mower 1, the lower the upper limit value of the mowing-blade rotation speed. The controller 13 includes a computer that includes an arithmetic processing unit, a storage device, and the like.

In front of the operation seat 7, traveling levers 12 are disposed as a traveling operator for operating the traveling of the lawn mower 1. In the present embodiment, the traveling levers 12 are an operator for transmitting the moving speed, the steering direction, and the forward and backward directions intended by the driver to the controller 13. The traveling levers 12 include a left traveling lever 12a and a right traveling lever 12b. To the left traveling lever 12a, an operation on the rotation of the left rear wheel is input from the driver. To the right traveling lever 12b, an operation on the right rear wheel is input from the driver.

The traveling levers 12 are configured to be tiltable forward and backward from a neutral position arranged in a substantially vertical direction to a predetermined maximum tilt position according to the operation amount. The left rear wheel and the right rear wheel are configured so that the rotation speeds in the forward direction and the backward direction increase according to the forward and backward operation amounts of the left traveling lever 12a and the right traveling lever 12b, respectively. The driver can rotationally drive the corresponding drive wheel in the forward direction by pushing and operating the traveling lever 12 forward. The driver can rotationally drive the corresponding drive wheel in the backward direction by pulling and operating the traveling lever 12 backward. In addition, the driver can drive the corresponding drive wheel so that the rotation speed increases as the operation amount of operating the traveling lever 12 with respect to the neutral position increases.

For example, the lawn mower 1 stops when the left traveling lever 12a and the right traveling lever 12b are in neutral positions. When the left traveling lever 12a and the right traveling lever 12b are operated forward at equal tilt angles, the lawn mower 1 goes straight. When the left traveling lever 12a and the right traveling lever 12b are operated backward at equal tilt angles, the lawn mower 1 goes backward. When the operation amounts of the left traveling lever 12a and the right traveling lever 12b are different, the lawn mower 1 turns. In the lawn mower 1, the steering angular velocity increases as the deviation of the operation amount of each traveling lever 12 increases.

The mowing-blade motor 15 is supported by the vehicle body frame 2. The mowing-blade motor 15 is disposed so that its rotating shaft extends in a substantially vertical direction in a lower region of the vehicle body frame 2. Similarly, the mowing blade 14 is disposed so that its rotating shaft extends in a substantially vertical direction in a lower region of the vehicle body frame 2. The mowing blade 14 may be fixed to a rotating shaft of the mowing-blade motor or may be fixed to a rotation body to which power is transmitted from the rotating shaft of the mowing-blade motor. In the present embodiment, the lawn mower 1 includes a plurality of mowing blades, and a mowing-blade motor is provided for each mowing blade.

A mowing-blade rotation speed input operator capable of selectively inputting the mowing-blade rotation speed by the driver is provided at a position near the operation seat 7, for example, on the right side of the operation seat 7. In the present embodiment, a mowing-blade rotation speed lever 16 is arranged as a mowing-blade rotation speed input operator. The mowing-blade rotation speed lever 16 is configured so that a lever position is selectively movable. The mowing-blade rotation speed is controlled so that the mowing-blade rotation speed changes according to the displacement position of the mowing-blade rotation speed lever 16. The mowing-blade rotation speed lever 16 may be in common with an ON/OFF operator to which rotation/stop of the mowing blade 14 is input from the driver, or may be different from the ON/OFF operator.

In the present embodiment, the lawn mower 1 may include a mowing-blade height adjustment mechanism 17 capable of adjusting the mowing-blade height from the wheel ground contact surface. The mowing-blade height adjustment mechanism 17 is a mechanism that supports the mowing blade 14 on the vehicle body frame 2 so that the height of the support position of the mowing blade 14 can be changed. In the mowing-blade height adjustment mechanism 17, for example, a housing 19 that supports the mowing blade 14 and the mowing-blade motor 15 is configured to be swingable with respect to a pivot fulcrum set in the vehicle body frame 2, so that the height position of the housing 19 can be made different.

A mowing-blade height input operator capable of selectively inputting the mowing-blade height by the driver is provided at a position near the operation seat 7, for example, on the right side of the operation seat 7. In the present embodiment, a mowing-blade height input knob 18 is arranged as a mowing-blade height input operator. The mowing-blade height input knob 18 is configured so that the angular position is selectively movable. A power transmission device such as a wire or a link mechanism is configured to be capable of transmitting the operation force of the knob 18 to the housing 19. Accordingly, the mowing-blade height can be made different by the angular displacement operation of the knob 18 by the driver.

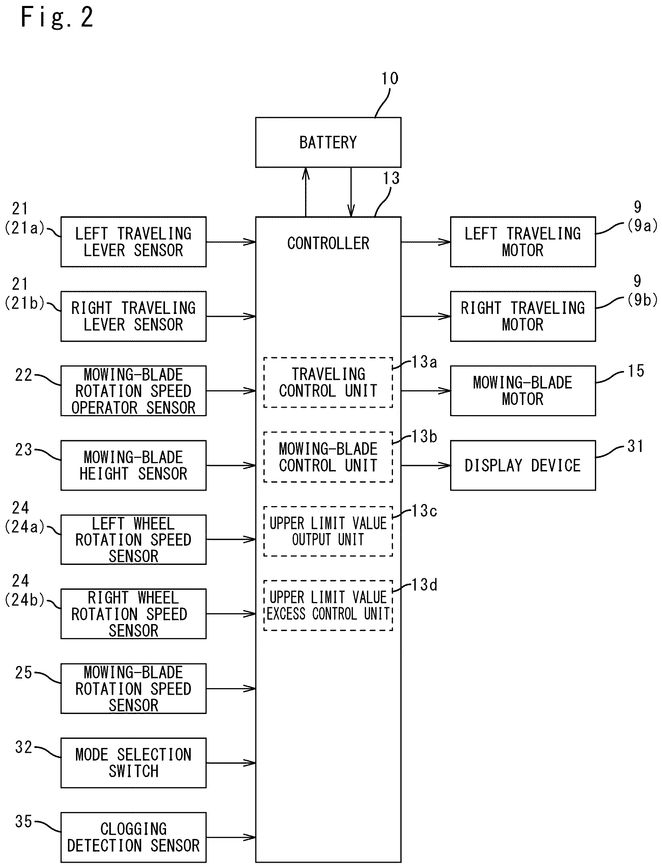

Fig. 2 is a block diagram showing the configuration of a lawn mower. The lawn mower 1 includes a traveling lever sensor 21, a mowing-blade rotation speed operator sensor 22, a mowing-blade height sensor 23, a wheel rotation speed sensor 24, and a mowing-blade rotation speed sensor 25. Each of the sensors 21, 22, 23, 24, and 25 is connected to the controller 13 to be able to output a detection result to the controller 13. In addition, the lawn mower 1 includes left and right traveling motors 9a and 9b, a mowing-blade motor 15, and a display device 31. The left and right traveling motors 9a and 9b, the mowing-blade motor 15, and the display device 31 are connected to the controller 13 to be able to operate according to a control command given from the controller 13. The controller 13 performs control to operate each motor based on the operation commands of the driver provided through various sensors. In addition, the controller 13 controls the display device 31 which displays information to the driver based on detection results of the state of the lawn mower provided through various sensors.

The traveling lever sensor 21 includes a left traveling lever sensor 21a and a right traveling lever sensor 21b that detect the positions of the respective traveling levers 12a and 12b. Each of the traveling lever sensors 21a and 21b is connected to the controller 13. The controller 13 controls the traveling motors 9 according to the detection results of the traveling lever sensors 21 to control the traveling operation of the lawn mower 1.

The mowing-blade rotation speed operator sensor 22 detects the position of the mowing-blade rotation speed lever 16. The controller 13 controls the mowing-blade motor 15 according to the detection result of the mowing-blade rotation speed operator sensor 22 to control the mowing-blade rotation speed. Specifically, even if the load changes due to mowing, the rotation speed of the mowing-blade motor 15 is feedback-controlled so as to be maintained at the specified rotation speed specified by the mowing-blade rotation speed lever 16.

The mowing-blade height sensor 23 detects the position of the mowing-blade height input knob 18 or the mowing-blade height. The controller 13 may control the mowing-blade motor 15 according to the detection result of the mowing-blade height.

The wheel rotation speed sensor 24 detects the rotation speed of the rear wheel 6. The mowing-blade rotation speed sensor 25 detects the mowing-blade rotation speed. The wheel rotation speed sensors 24 include a left wheel rotation speed sensor 24a and a right wheel rotation speed sensor 24b that detect the rotation speeds of the left rear wheel 6a and the right rear wheel 6b, respectively. The controller 13 may correct the rotation speeds of the traveling motors 9 according to the detection results of the wheel rotation speed sensors 24a and 24b. In addition, the controller 13 may correct the rotation speed of the mowing-blade motor 15 according to the detection result of the mowing-blade rotation speed sensor 25.

The display device 31 controls a display screen according to a display command given from the controller 13. For example, the display device may display support information for supporting a driving operation. For example, the controller may display information indicating an appropriate mowing-blade rotation speed on the display device according to the vehicle state acquired from the sensor. In addition, the controller may include a notification lamp that notifies the driver that the mowing-blade rotation speed exceeds a predetermined upper limit value according to the vehicle state acquired from the sensor.

By executing a predetermined program, the controller 13 functionally includes a traveling control unit 13a, a mowing-blade control unit 13b, an upper limit value output unit 13c, and an upper limit value excess control unit 13d. As a function of the traveling control unit 13a, the controller 13 gives an operation command to each of the traveling motors 9a and 9b based on detection information given from various sensors to control traveling. As a function of the mowing-blade control unit 13b, the controller 13 gives an operation command to the mowing-blade motor 15 based on detection information given from various sensors to control the mowing blade 14.

As a function of the upper limit value output unit 13c, the controller 13 calculates an upper limit value of the mowing-blade rotation speed based on a predetermined mowing-blade rotation speed upper limit value L1. In addition, as a function of the upper limit value excess control unit 13d, the controller 13 corrects an operation command given to the mowing-blade motor 15 according to the calculated upper limit value, and/or displays information indicating that the mowing-blade rotation speed has reached the upper limit value on the display device 31.

The upper limit value output unit 13c stores mowing-blade rotation speed characteristic data indicating the relationship between the moving speed and the upper limit value of the mowing-blade rotation speed. The upper limit value output unit 13c outputs the mowing-blade rotation speed lower as the moving speed of the lawn mower 1 is lower, based on the predetermined mowing-blade rotation speed upper limit value L1. When the mowing-blade rotation speed reaches the upper limit value L1, the upper limit value excess control unit 13d limits the rotation speed of the mowing-blade motor 15 so as to maintain the mowing-blade rotation speed at the upper limit value L1. When the mowing-blade rotation speed exceeds the upper limit value L1, the upper limit value excess control unit 13d may perform control so that information indicating that the mowing-blade rotation speed has reached the upper limit value is displayed on the display device 31, instead of limiting the rotation speed of the mowing-blade motor 15 or together with limiting the rotation of the mowing-blade motor 15. For example, the display device 31 may be controlled to turn on a notification lamp for notifying the driver that the mowing-blade rotation speed exceeds the upper limit value.

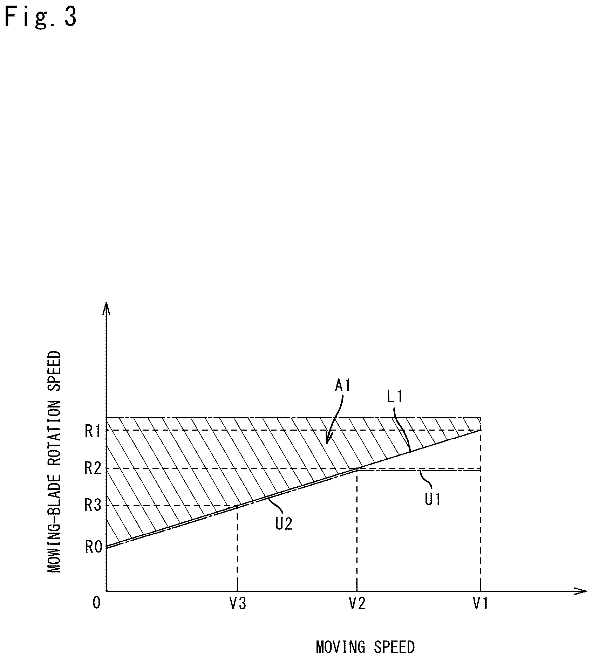

Fig. 3 is a graph showing a relationship between a moving speed and a mowing-blade rotation speed upper limit value. Fig. 3 displays the horizontal axis representing the moving speed of the lawn mower and the vertical axis representing the mowing-blade rotation speed (rotation speed). The mowing-blade rotation speed upper limit value L1 is set as a rotation capable of suppressing the mowing-blade rotation speed while securing the lawn mowing quality. In Fig. 3, a mowing-blade rotation speed excess region A1 is indicated by hatching.

The mowing-blade rotation speed upper limit value L1 is set to R0 which is a value of zero or larger when the moving speed is zero. The mowing-blade rotation speed upper limit value L1 is set to decrease as the moving speed decreases. In the present embodiment, the mowing-blade rotation speed upper limit value L1 is set to be linearly proportional to the moving speed. When the moving speed is a first moving speed V1, the mowing-blade rotation speed upper limit value is set to a first upper limit value R1. In this case, when the moving speed is a second moving speed V2 smaller than the first moving speed V1, the mowing-blade rotation speed upper limit value is set to a second upper limit value R2 smaller than the first upper limit value R1.

In the present embodiment, the controller 13 stores mowing-blade rotation speed characteristic data in which the upper limit value L1 for each moving speed is determined. The controller 13 outputs the upper limit value of the mowing-blade rotation speed lower as the moving speed of the lawn mower 1 is lower based on the mowing-blade rotation speed characteristic data. In addition, based on the upper limit value L1 of the mowing-blade rotation speed in the mowing-blade rotation speed characteristic data, when the mowing-blade rotation speed is higher than the upper limit value L1, the controller 13 performs control to suppress the mowing-blade rotation speed as the upper limit value excess control.

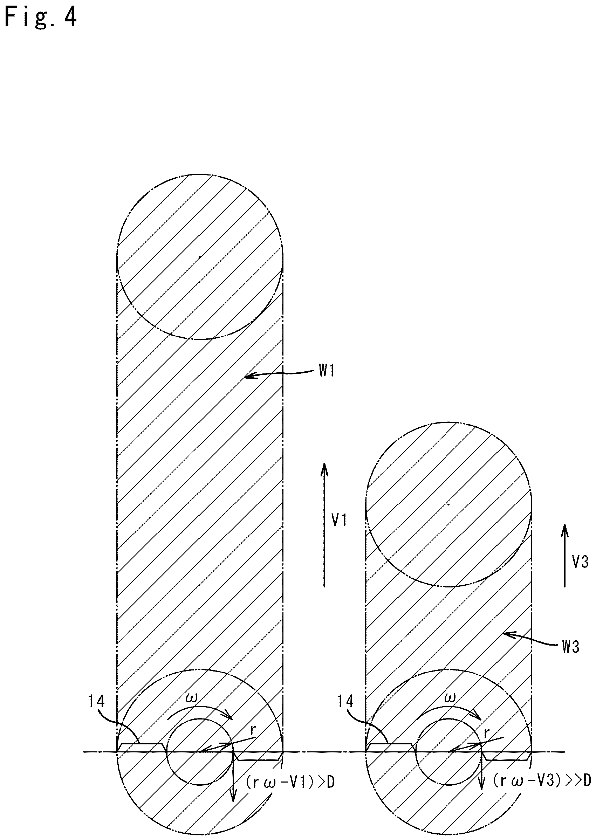

Fig. 4 is a diagram showing a relationship between a moving speed and a work area. The mowing blade 14 can sharpen a cutting surface of lawn grass by a relative speed to the lawn grass growing on the ground exceeding a predetermined speed. By sharpening the cutting surface, damage to the lawn grass after mowing can be reduced. In addition, by the relative speed exceeding the predetermined speed, it is possible to sufficiently resist mowing resistance and prevent the occurrence of mowing unevenness. By setting the relative speed of the mowing blade 14 to the lawn grass to the predetermined speed or higher as described above, it is easy to secure the lawn mowing quality. For example, concerning a mowing-blade, let a radius from a rotation center to a radially inner end of the blade portion be r [m], let an angular velocity of the mowing-blade be ω [rad/s], let an upper limit moving speed of the lawn mower be V1 [m/s], and let a predetermined relative speed to lawn necessary for mowing be D [m/s]. In this case, the relative speed (r · ω - V1) of the mowing-blade is preferably set to a value satisfying (r · ω - V1) > D. The lawn mower 1 rotates the mowing blade 14 while traveling. The higher the moving speed of the lawn mower 1, the greater the area of lawn grass mowed per unit time. For this reason, even when the upper limit moving speed (for example, V1) assumed by the driver is reached, the rotation speed is often set to a mowing-blade rotation speed (rotation speed) at which the mowing blade 14 rotates at an angular speed that sufficiently maintains the relative speed of the mowing-blade to the lawn grass.

When the moving speed of the lawn mower 1 decreases (for example, V3) below the upper limit moving speed (for example, V1), the area of the lawn grass mowed per unit time is reduced. For example, at the moving speed V3, the area W3 of lawn mowed per unit time is smaller than the area W1 of lawn mowed per unit time at the moving speed V1. Therefore, mowing quality can be secured even if the mowing-blade rotation speed is reduced. In this case, at the mowing-blade rotation speed set according to the upper limit moving speed (V1), the relative speed to the lawn grass is higher than necessary, and the rotation speed tends to be the excessive rotation speed equal to or higher than the relative speed at which the quality is maintained. For example, when the moving speed decreased with respect to the upper limit moving speed V1 is V3 [m/s], the relative speed (r · ω - V3) of the mowing-blade may be unnecessarily more than the necessary relative speed D ((r · ω - V3) >> D). In the present embodiment, since the upper limit value of the mowing-blade rotation speed is set to decrease as the traveling speed decreases, it is possible to prevent excessive rotation of the mowing-blade while maintaining the mowing quality of the mowing-blade. Accordingly, the power consumed by the mowing-blade can be suppressed, and as a result, the region that can be mowed with the power stored in the battery can be easily increased. Alternatively, as a result, the number of times of charging the battery can be reduced.

As shown in Fig. 3, for example, when the driver manually sets the mowing-blade rotation speed to the second upper limit value R2 with the mowing-blade rotation speed lever 16, the controller 13 rotates the mowing blade 14 at the second upper limit value R2 in a situation where the moving speed is the second moving speed V2 or higher (U1: non-suppressed mowing-blade rotation region) as shown by a one-dot chain line in Fig. 3 by the function of the mowing-blade control unit 13b. In addition, in a situation where the moving speed decreases from the second moving speed V2 (U2: suppressed mowing-blade rotation region), when the mowing-blade motor 15 is corrected, the mowing-blade rotation speed is decreased according to the decrease in the moving speed so as to retreat from the mowing-blade rotation excess region A1. For example, when the moving speed decreases to the third moving speed V3 lower than the second moving speed V2, since the second upper limit value R2 exceeds the third upper limit value R3 set at the third moving speed V3, the controller 13 decreases the upper limit value to the third upper limit value R3 set at the third moving speed V3. The mowing-blade rotation speed lever 16 is configured so that the first upper limit value R1, the second upper limit value R2, and the third upper limit value R3 are selected as the mowing-blade rotation speed, for example.

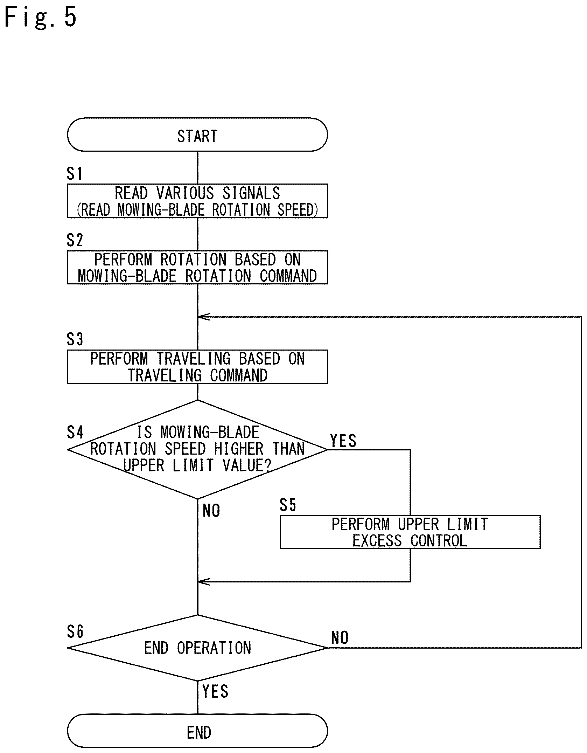

Fig. 5 is a control flow diagram of a lawn mower. By being supplied with power, the controller 13 proceeds to step S1 and starts control of the lawn mower 1. The controller 13 reads various signals in step S1. For example, the controller 13 reads a signal indicating the mowing-blade rotation speed detected by the mowing-blade rotation speed operator sensor 22. As described above, the controller 13 reads various types of information necessary for controlling the lawn mower 1, and then proceeds to step S2.

In step S2, the controller 13 starts control of the mowing-blade motor 15 based on the mowing-blade rotation command read in step S1. Accordingly, the mowing-blade of the lawn mower 1 rotates at the mowing-blade rotation speed input by the driver.

When the controller 13 starts controlling the mowing-blade motor 15, the process proceeds to step S3. In step S3, the controller 13 acquires respective signals indicating traveling commands from the traveling lever sensors 21a and 21b. In addition, the controller 13 starts control of the left and right traveling motors 9a and 9b based on the traveling commands and proceeds to step S4. Accordingly, the left and right drive wheels of the lawn mower 1 travel with the operation amount input by the driver.

In step S4, the controller 13 determines whether the mowing-blade rotation speed is higher than the upper limit value L1 in the mowing-blade rotation speed characteristic data based on the moving speed calculated based on the signal from the wheel rotation speed sensor 24 and the mowing-blade rotation speed according to the signal from the mowing-blade rotation speed sensor 25.

In step S4, if the determination result is YES, that is, if the mowing-blade rotation speed exceeds the upper limit value L1, the controller 13 proceeds to step S5. In step S5, the controller 13 performs upper limit excess control. In the present embodiment, as the upper limit value excess control, the mowing-blade motor 15 is controlled so that the mowing-blade rotation speed output by the upper limit value output unit 13c maintains the upper limit value of the mowing-blade rotation speed in the mowing-blade rotation speed characteristic data, that is, so that the mowing-blade rotation speed becomes the upper limit value of the mowing-blade rotation speed when the mowing-blade rotation speed exceeds the upper limit value of the mowing-blade rotation speed. When executing the upper limit value excess control, the controller 13 proceeds to step S6.

In step S6, the controller 13 determines the operation end command, for example, whether the power supply is stopped. If determining that the operation end command is given, the controller 13 ends the operation. In addition, if determining that the operation end command is not given, the controller 13 returns to step S3 to continue the control of the lawn mower 1.

In addition, if the determination result is NO in step S4, that is, if the mowing-blade rotation speed is the upper limit value L1 or less, the controller 13 does not execute the upper limit value excess control. In this case, the controller 13 maintains the mowing-blade rotation speed specified by the driver and causes the lawn mower 1 to travel at the traveling speed specified by the driver. After controlling the mowing-blade and the drive wheel in this manner, the controller 13 proceeds to step S6.

As described above, in the lawn mower 1, the upper limit value output unit 13c of the controller 13 outputs the upper limit value of the mowing-blade rotation speed lower as the moving speed of the lawn mower 1 decreases. The controller 13 controls the mowing-blade motor 15 based on the upper limit value of the mowing-blade rotation speed output by the upper limit value output unit 13c. Accordingly, excessive rotation of the mowing-blade rotation speed can be prevented.

As the upper limit value excess control, instead of controlling the mowing-blade motor 15, the controller 13 may control the notification lamp to turn on a notification lamp for reporting that the upper limit value of the mowing-blade rotation speed is exceeded. Accordingly, it is possible to prompt the driver to operate the mowing-blade rotation speed and to prevent excessive rotation of the mowing-blade rotation speed. The notification lamp 31 is turned off when the mowing-blade rotation speed becomes equal to or lower than the upper limit value L1 of the mowing-blade rotation speed in the mowing-blade rotation speed characteristic data. In addition, as the upper limit value excess control, the upper limit value in the moving speed of the lawn mower 1 may be displayed on the display device 31 so that the lower the moving speed of the lawn mower 1, the lower the upper limit value of the mowing-blade rotation speed. In addition, as the upper limit value excess control, the display device 31 may be controlled, and the mowing-blade motor 15 may be controlled.

The lawn mower 1 may include a mode selector 32 as shown in Fig. 1. The mode selector 32 may be, for example, a mode selection switch capable of switching between a power saving mode and an input priority mode, to be described below. In the power saving mode, the controller 13 limits the rotation speed of the mowing-blade motor 15 so as to maintain the mowing-blade rotation speed at the upper limit value when the mowing-blade rotation speed reaches the upper limit value. In the input priority mode, the controller 13 maintains the input mowing-blade rotation speed even if the mowing-blade rotation speed exceeds the upper limit value.

For example, when the mode selection switch 32 is pressed to be brought into the ON state, the controller 13 sets the power saving mode. In addition, when the mode switch 32 is brought into the OFF state, the controller 13 sets the input priority mode. As described above, the mode selector 32 is configured to be able to selectively switch between the input priority mode and the power saving mode. It should be noted that the mode selection by the mode switch 32 is an example, and the input priority mode may be set while the switch is in the ON state. In addition, switches for selecting the power saving mode and the input priority mode may be separately provided.

When the power saving mode is set, the controller 13 controls the mowing-blade motor 15 so as to maintain, in other words, suppress the mowing-blade rotation speed to the upper limit value when the mowing-blade rotation speed reaches the upper limit value. When the input priority mode is set, the controller 13 controls the mowing-blade motor 15 so that the input mowing-blade rotation speed is obtained even if the mowing-blade rotation speed exceeds the upper limit value L1. In addition, when the input priority mode is set, the controller 13 may control the notification lamp 31 to alert the driver so as to report that the upper limit value is exceeded when the mowing-blade rotation speed exceeds the upper limit value of the mowing-blade rotation speed in the mowing-blade rotation speed characteristic data L1.

In the present embodiment, the controller 13 may execute, as the upper limit value excess control, any one of suppression control of suppressing the mowing-blade rotation speed using the mowing-blade motor 15 and notification control of prompting the driver to suppress the mowing-blade rotation speed using the display device 31. In addition, the controller 13 may execute both the suppression control and the notification control as the upper limit value excess control.

In the embodiment described above, the upper limit value output unit 13c of the controller 13 outputs the upper limit value of the mowing-blade rotation speed based on the upper limit value output pattern L1 which is the single mowing-blade rotation speed characteristic data, but the present disclosure is not limited thereto. That is, a plurality of upper limit value output patterns may be set. The upper limit value output unit 13c of the controller 13 may select one upper limit value output pattern from among the plurality of upper limit value output patterns based on the state detection result of the lawn mower different from the moving speed of the lawn mower 1, and output the upper limit value of the mowing-blade rotation speed. In other words, the upper limit value output unit 13c of the controller 13 may correct the upper limit value based on the state detection result of the lawn mower different from the moving speed. Furthermore in other words, even if the moving speed is the same, the upper limit value may be made different based on other state detection results of the lawn mower 1.

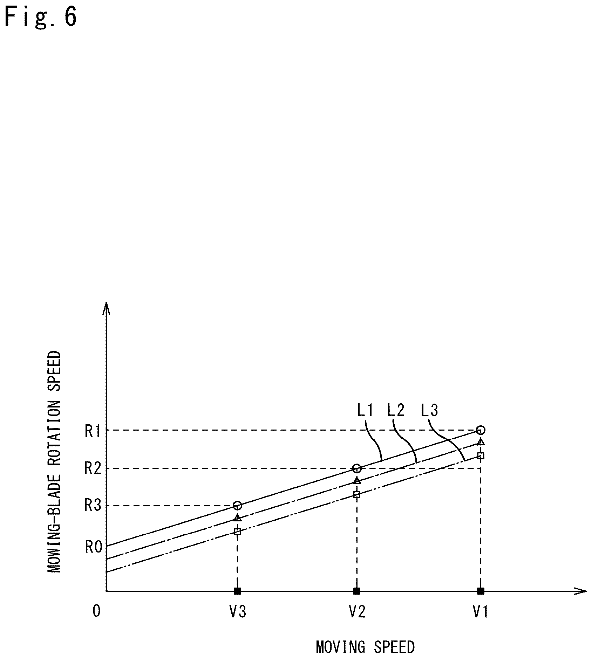

Fig. 6 is a graph showing a modification of the mowing-blade rotation speed upper limit value. The upper limit value output unit 13c of the controller 13 may select or correct the upper limit value of the mowing-blade rotation speed based on the state detection result of the lawn mower different from the moving speed of the lawn mower 1. In this case, the lawn mower 1 includes a state detection unit that detects a state of the lawn mower 1 different from the moving speed of the lawn mower 1. For example, a mowing-blade height sensor 23 may be used as the state detection unit, and the upper limit value output pattern may be made different according to the height of the mowing-blade with respect to the ground contact surface. Specifically, when the height of the mowing-blade is higher than a predetermined value, the upper limit value output pattern may be made different as compared with when the height of the mowing-blade is lower than the predetermined value. As shown in Fig. 6, the upper limit value output patterns L3, L2, and L1 in which the upper limit value of the mowing-blade rotation speed is corrected higher as the mowing-blade height increases may respectively be set to the third mowing-blade height indicated by a white square having the smallest mowing-blade height, the second mowing-blade height indicated by a white triangle higher than the third mowing-blade height, and the first mowing-blade height indicated by a white circle higher than the second mowing-blade height.

A lawn mower mechanism may be employed in which rotation of the mowing-blade causes air between the mowing-blade and the lawn grass to move above the mowing-blade, generating a force that sucks the lawn grass upward. In other words, the rotation of the lawn mower is configured to make the pressure on the lawn grass side lower than the pressure on the opposite side from the lawn grass across the mowing-blade. By generating the force for sucking the lawn grass upward in this manner, it is possible to easily grow the lawn grass vertically, to make the cutting surface by the mowing-blade uniform, and to secure the mowing-blade quality. As described above, since the mowing-blade rotation speed is increased as the mowing-blade height increases, even if the vertical height between the mowing-blade and the lawn grass increases, it is easy to maintain the suction force necessary for standing the lawn grass, and it is easy to maintain the mowing-blade quality. Accordingly, it is possible to increase rotation suppressing opportunities of the mowing-blade rotation speed while maintaining the mowing-blade quality, and to further achieve power saving. Furthermore, when it is determined that the height of the mowing-blade with respect to the ground contact surface is switched to the maximum value, in other words, the height at which mowing is not assumed, the rotation of the mowing-blade may be stopped so that the mowing-blade rotation speed becomes zero. When the mowing-blade height indicated by a black square in Fig. 6 is adjusted to the highest non-lawn mowing height, the rotation of the mowing-blade may be stopped. In addition, as a characteristic of the lawn mower, when a reduction in suction force is small due to an increase in the mowing-blade height according to a change in the mowing-blade height, the output and the rotation speed may be set to be reduced according to a reduction in the mowing load.

In addition, for example, load torque for rotating the mowing-blade at a predetermined rotation speed may change depending on the type and density of the lawn grass. In this case, the upper limit value output pattern may be made different according to the mowing-load of the lawn grass, in other words, the torque of the mowing-blade motor 15 for rotating the mowing-blade by using a load torque detection unit that detects a load torque on the mowing blade 14 as the state detection unit. Specifically, when the rotation torque required for the rotation of the mowing-blade motor 15 is lower than a predetermined value, the upper limit value output pattern may be made smaller than that when the rotation torque is higher than the predetermined value. As shown in Fig. 6, the upper limit value output patterns L1, L2, and L3 in which the upper limit value of the mowing-blade rotation speed is corrected lower as the load torque decreases may respectively be set to the first load torque indicated by a white circle having the smallest load torque, the second load torque indicated by a white triangle smaller than the first load torque, and the third load torque indicated by a white square smaller than the second load torque. Accordingly, it is possible to increase rotation suppressing opportunities of the mowing-blade rotation speed and to further achieve power saving. Furthermore, when it is determined that the load torque is a minimum value, in other words, zero, the rotation of the mowing-blade may be stopped so that the mowing-blade rotation speed becomes zero. When the load torque indicated by a black square in Fig. 6 is zero, the rotation of the mowing-blade may be stopped.

For example, the lawn mower 1 may include a load torque sensor 34 (see Fig. 1) as a load torque detection unit that detects a load torque on the mowing blade 14. The load torque sensor 34 may be configured to detect the load torque on the mowing-blade motor 15, for example, by measuring the current value of the mowing-blade motor 15.

In addition, the lawn mower 1 may include a clogging detection sensor 35 (Fig. 2) as a grass clogging detection unit that detects grass clogging of the mowing blade 14. As the grass clogging detection sensor 35, for example, a non-contact type clogging detection sensor 35 that transmits a grass clogging signal when grass such as lawn is clogged in the housing 19 in which the mowing blade 14 is arranged can be used. When a signal from the grass clogging detection unit 35 is input, the controller 13 may control the mowing-blade motor 15 in a grass-clogging elimination mode for eliminating grass clogging.

In the grass clogging elimination mode, for example, the mowing-blade motor 15 may be controlled to rotate the mowing blade 14 in a direction opposite to that at the time of mowing the lawn for a predetermined time. In the grass clogging elimination mode, the mowing-blade motor 15 may be controlled to eliminate grass clogging by periodically changing the rotation speed of the mowing blade 14, for example. As described above, when grass clogging occurs, it is possible to suppress the power consumption caused by the rotation of the mowing-blade in the grass-clogging state by quickly implementing grass-clogging elimination.

A load torque detection unit 34 may be used as the grass clogging detection unit 35, and determination of grass clogging may be made when the load torque detected by the load torque detection unit 34 is greater than or equal to a predetermined torque. As the grass clogging detection unit 35, a grass clogging switch that is pressed when the driver recognizes grass clogging may be disposed in the lawn mower 1.

In addition, the lawn mower 1 may include the load torque sensor 34 serving as the load state detection unit that detects the load state of the mowing-blade motor 15, and when it is determined that the load state of the mowing-blade motor 15 detected by the load torque sensor 34 is abnormal, the display device 31 may be controlled to display information indicating a grass clogging state in which grass clogging to the mowing blade 14 has occurred.

The controller 13 may determine that the load state of the mowing-blade motor 15 is abnormal when the load torque detected by the load torque sensor 34 is larger than the predetermined torque, and may determine that the load state of the mowing-blade motor 15 is normal when the load torque detected by the load torque sensor 34 is equal to or less than the predetermined torque.

The display device 31 may include a display lamp that displays information indicating a grass-clogging state in which grass clogging to the mowing blade 14 has occurred, and the controller 13 may control the display device 31 so that the display device 31 turns on the display lamp when it is determined that the load state of the mowing-blade motor 15 is abnormal.

The upper limit value output unit 13c of the controller 13 uses the mowing-blade rotation speed characteristic data L1 indicating the relationship between the moving speed and the upper limit value of the mowing-blade rotation speed, but may change the upper limit value according to the traveling state or the change in the traveling state even at the same moving speed. For example, at the time of turning or retreating, the upper limit value of the mowing-blade rotation speed may be output lower than that at the time of straight traveling. Similarly, at the time of switching from the transient state such as at the start of turning and at the end of turning, the upper limit value of the mowing-blade rotation speed may be output lower than that at the time of straight traveling. As described above, the upper limit value may be changed according to a situation in which the speed is likely to change or a situation in which the mowing load changes in the traveling state or the change in the traveling state.

In this case, based on signals from the left wheel rotation speed sensor 24a and the right wheel rotation speed sensor 24b which are the wheel rotation speed sensors 24, the controller 13 is configured to determine whether being at the time of moving forward or backward and to determine whether being at the time of moving straight or turning when it is determined to be at the time of moving forward.

Then, the upper limit value output unit 13c of the controller 13 uses the mowing-blade rotation speed characteristic data L1 when traveling straight to output the upper limit value of the mowing-blade rotation speed corresponding to the moving speed, but outputs the upper limit value of the mowing-blade rotation speed lower by a predetermined rotation speed as compared with the case of straight traveling at the same moving speed when turning or retreating. In addition, the lowering rotation speed for lowering the upper limit value of the mowing-blade rotation speed at the time of turning or retreating as compared with that at the time of straight traveling may be the same at the time of turning and retreating, but may be different at the time of turning and retreating.

In the lawn mower 1, when the upper limit value of the mowing-blade rotation speed is output based on any one of the plurality of upper limit value output patterns, the above-described modifications may be appropriately combined, for example, the upper limit value of the mowing-blade rotation speed output by the upper limit value output unit 13c may be output higher as the mowing-blade height adjusted by the mowing-blade height adjustment mechanism 17 is higher.

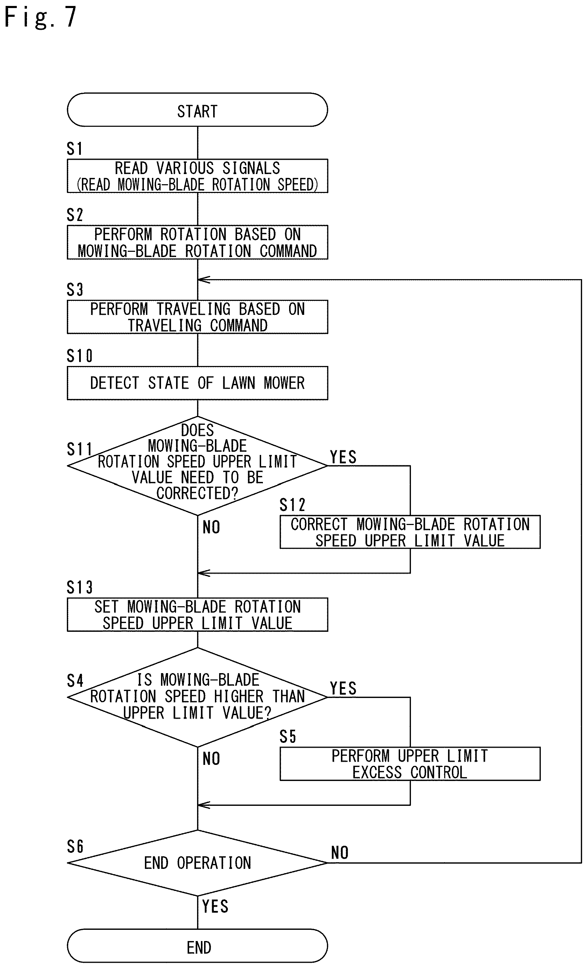

Fig. 7 is a control flow diagram of the lawn mower when the mowing-blade rotation speed upper limit value is corrected. Only portions different from those in Fig. 5 will be described, and a description of the same processing as that in Fig. 5 will be omitted. When the mowing-blade rotation speed upper limit value is corrected, the controller 13 proceeds to step S10 after step S3. In step S10, the controller 13 reads the signals from the various sensors to acquire a detection result of the state of the lawn mower different from the moving speed of the lawn mower 1 and proceeds to step S11. In step S11, the controller 13 determines whether the mowing-blade rotation speed upper limit value needs to be corrected. The controller 13 reads a rule as to whether to correct the mowing-blade rotation speed upper limit value as described above, and when determining to correct the mowing-blade rotation speed upper limit value based on the rule, the controller proceeds to step S12. For example, in step S11, when the mowing-blade height is not the first mowing-blade height or when the load torque is not the first load torque, it is determined that the mowing-blade rotation speed upper limit value is corrected.

In step S12, the controller 13 corrects the mowing-blade rotation speed upper limit value, for example, by setting an upper limit value output pattern according to the mowing-blade height or the load torque, and proceeds to step S13. When determining that the mowing-blade rotation speed upper limit value does not need to be corrected in step S11, the controller 13 proceeds to step S13. In step S13, the controller 13 sets a mowing-blade rotation speed upper limit value. If it is determined in step S11 that the mowing-blade rotation speed upper limit value does not need to be corrected, a preset mowing-blade rotation speed upper limit value is set. If it is determined in step S11 that the mowing-blade rotation speed upper limit value needs to be corrected, the mowing-blade rotation speed upper limit value corrected in step S12 is set as a reference mowing-blade rotation speed upper limit value. The process proceeds to step S4. As described above, by including the processing of correcting the mowing-blade rotation speed upper limit value, the controller 13 can implement setting the mowing-blade rotation speed upper limit value corresponding to a more precise situation.

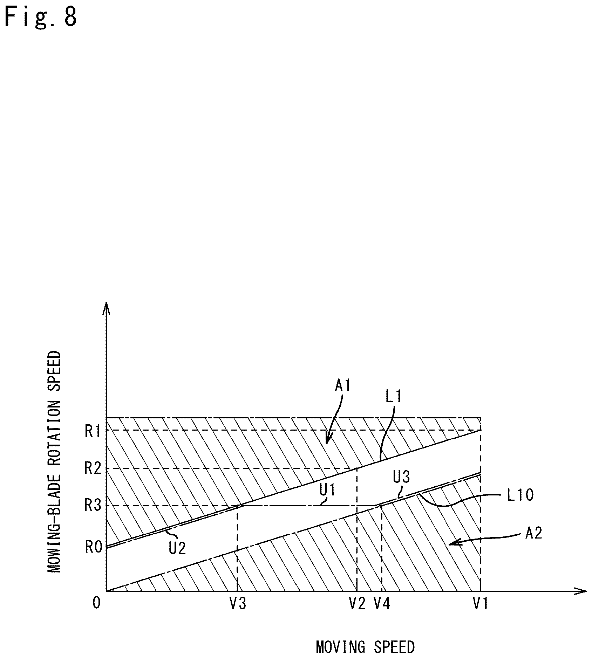

Fig. 8 is a graph showing the relationship between the moving speed, and the mowing-blade rotation speed upper limit value and the mowing-blade rotation speed lower limit value. As shown in Fig. 8, not only the mowing-blade rotation speed upper limit value L1 but also the mowing-blade rotation speed lower limit value L10 may be set. The controller 13 stores mowing-blade rotation speed characteristic data in which the lower limit value L10 for each moving speed is determined. In addition, when the mowing-blade rotation speed is less than the lower limit value L10 based on the lower limit value L10 of the mowing-blade rotation speed in the mowing-blade rotation speed characteristic data, the controller 13 may display that effect on the display device 31. In Fig. 8, a mowing-blade rotation speed excess region A1 and a mowing-blade rotation speed deficiency region A2 are indicated by hatching.

The controller 13 may implement different notifications when the mowing-blade rotation speed exceeds the mowing-blade rotation speed upper limit value L1 and when the mowing-blade rotation speed is less than the mowing-blade rotation speed lower limit value L10. Accordingly, it is possible to easily provide the driver with information to support the operation. The controller 13 may control the mowing-blade motor 15 so that the mowing-blade rotation speed does not exceed the mowing-blade rotation speed upper limit value L1 and does not fall below the mowing-blade rotation speed lower limit value L10. As shown in Fig. 8, for example, when the driver manually sets the mowing-blade rotation speed to the third upper limit value R3 with the mowing-blade rotation speed lever 16, the controller 13 may control the mowing-blade motor 15 so that the mowing-blade motor 15 rotates the mowing blade 14 at the third upper limit value R3 in a situation where the moving speed is the third moving speed V3 or higher and the fourth moving speed V4 or lower (U1: non-suppressed mowing-blade rotation region), rotates the mowing blade 14 at the upper limit value L1 in a situation where the moving speed is lower than the third moving speed V3 (U2: corrected mowing-blade rotation region), and rotates the mowing blade 14 at the lower limit value L10 in a situation where the moving speed exceeds the fourth moving speed V4 (U3: corrected mowing-blade rotation region), as shown by the one-dot chain line in Fig. 8.

The lawn mower 1 of the present embodiment only needs to be a lawn mower including a traveling drive source that drives the traveling drive wheel and a mowing-blade drive source that rotationally drives the mowing-blade, and a drive source other than the electric motor may be used. For example, at least any one of the traveling drive source and the mowing-blade drive source may be an internal combustion engine. For example, an internal combustion engine may be used as a traveling drive source, and an electric motor may be used as a mowing-blade drive source. In the present embodiment, the mowing-blade motor is provided for each mowing-blade, but a plurality of mowing-blades may be rotationally driven by a common mowing-blade drive source. In the present embodiment, the lawn mower 1 includes two mowing-blades, but may include one mowing-blade or three or more mowing-blades. In the present embodiment, a lawn is described as a mowing target to be mowed by the lawn mower 1. However, the lawn mower 1 may be used for mowing grass other than a lawn. For example, the mowing-blade target may be grass other than the lawn that grows on the ground in a garden, a park, or the like.

In the present embodiment, the lawn mower 1 is configured so that the left and right drive wheels are independently rotationally driven. However, the lawn mower 1 may be configured so that the left and right drive wheels are rotationally driven in conjunction with each other. In this case, it is preferable to include a steering mechanism that steers the vehicle body. As wheels for steering, wheels different from the drive wheels may be provided, or the drive wheels may function as steering wheels. In addition, in the present embodiment, the traveling speed, the steering direction, and the forward-backward direction intended by the driver are configured to be transmitted to the controller by a single traveling lever. However, the traveling speed, the steering direction, and the forward-backward direction may be configured to be transmitted by operators different from each other. In addition, in the present embodiment, a worker operates the lawn mower in a riding state, but the present invention is not limited thereto. For example, the lawn mower may be operated by a worker in a non-riding state without being provided with a riding space. In addition, the lawn mower may execute the grass-mowing operation semi-automatically or automatically while a part of the operation of the worker is omitted.

The operator operated by the driver is not limited to the above-described embodiment. The mowing-blade rotation speed input operator is not limited to the lever structure. For example, the mowing-blade rotation speed input operator only needs to be capable of detecting the input from the driver by a sensor, and may have a knob structure or a push-button structure. Similarly, an existing mechanism can be used for the mowing-blade height adjustment mechanism. The lawn mower does not need to have a mowing-blade height adjustment mechanism. In addition, the lawn mower does not need to have a mode switching function. That is, at least the operation in the power saving mode only needs to be available. In addition, a case of having the upper limit value correction function has been described, but a case of not having the upper limit value correction function may be used.

The mowing-blade rotation speed upper limit value L1 may be not linearly proportional to the moving speed. For example, the mowing-blade rotation speed upper limit value L1 may be set to decrease stepwise, in other words, discontinuously as the moving speed decreases. In addition, the mowing-blade rotation speed upper limit value L1 may change in a curved shape such as a quadratic curve as the moving speed decreases. In addition, the mowing-blade rotation speed characteristic data for setting the upper limit value may be stored as a table or a map in which the upper limit value of the mowing-blade rotation speed is stored for each vehicle speed which is the moving speed of the lawn mower. In addition, the mowing-blade rotation speed characteristic data may be stored as a calculation formula for calculating an upper limit value of the mowing-blade rotation speed when a vehicle speed is given.

In the lawn mower 1 according to the present embodiment, the rotation speed is controlled, but torque control may be performed. That is, the upper limit value of the mowing-blade rotation speed may be indirectly set by setting the upper limit value of the torque of the mowing-blade motor instead of the upper limit value of the mowing-blade rotation speed.

Deterioration of the mowing-blade may be estimated, and an upper limit value of the mowing-blade rotation speed may be set according to an estimated deterioration situation of the mowing-blade. For example, when it is determined that the deterioration is low, the upper limit value of the mowing-blade rotation speed may be lowered as compared with the case where it is determined that the deterioration is high. Regarding the deterioration of the mowing-blade, the deterioration may be estimated also by detecting the operating time from the replacement time of the mowing-blade. The upper limit value of the mowing-blade rotation speed may be set smaller as the total operation time from the replacement time of the mowing-blade, the mowing-blade rotation integrated time in a state where a load is applied, and the cumulative torque of the load of the mowing-blade are smaller, as compared with when the total operation time, the mowing-blade rotation integrated time, and the cumulative torque are larger.

The mowing-quality and the like may be detected by a sensor value, and the upper limit value of the mowing-blade rotation speed may be updated and set based on the detected sensor value. For example, when it is determined that the mowing quality is the predetermined quality or less by the imaging result of the mowing situation, specifically by photographing the size of the mowing waste and the situation of the ground after mowing, the upper limit value of the mowing-blade rotation speed may be set to be increased.

In the power saving mode, when the mowing-blade rotation speed is limited against the mowing-blade rotation speed pointed out by the mowing-blade rotation speed lever, in order to prevent false recognition by the driver, information indicating that the mowing-blade rotation speed is being suppressed may be displayed.

As described above, the lawn mower 1 according to the present embodiment includes: a vehicle main body 3; a traveling motor 9 provided in the vehicle main body 3, the traveling motor configured to drive a traveling drive wheel 6; a mowing-blade motor 15 provided in the vehicle main body 3, the mowing-blade motor configured to rotationally drive a mowing blade 14 for lawn mowing; and an upper limit value output unit 13c configured to output an upper limit value of a mowing-blade rotation speed. The upper limit value output unit 13c outputs an upper limit value of the mowing-blade rotation speed lower as the moving speed of the lawn mower 1 is lower.

In the lawn mower 1, when the moving speed of the lawn mower 1 decreases, the upper limit value of the mowing-blade rotation speed is output lower than when the moving speed is high. Accordingly, it is easy to adjust the mowing-blade rotation speed to be the upper limit value or less. Since the upper limit value of the mowing-blade rotation speed is output low when the moving speed is low, it is possible to prevent the mowing-blade rotation speed from being excessively rotated at a high speed in a situation where the moving speed is low. This can prevent influence on lawn mowing quality and reduce unnecessary energy consumption due to mowing-blade rotation.

In addition, the lawn mower 1 further includes: a display device 31, and a controller 13 configured to control at least one of the mowing-blade motor 15 and the display device 31. The controller 13 can control at least one of the mowing-blade motor 15 and the display device 31 based on an upper limit value of a mowing-blade rotation speed output by the upper limit value output unit 13c.

Accordingly, when the controller 13 controls the mowing-blade motor 15 based on the upper limit value of the mowing-blade rotation speed by the upper limit value output unit 13c, excessive rotation of the mowing-blade rotation speed can be prevented without an operation by the driver. When the controller 13 controls the display device 31 based on the upper limit value of the mowing-blade rotation speed by the upper limit value output unit 13c, the operation of the mowing-blade rotation speed by the driver is prompted, and excessive rotation of the mowing-blade rotation speed can be prevented. In this manner, unnecessary energy consumption due to the mowing-blade rotation can be reduced by at least one of the output control of the mowing-blade motor 15 and the display control of the display device 31.

In addition, the lawn mower 1 further includes: a controller 13 configured to control the mowing-blade motor 15, and a mowing-blade rotation speed sensor 25 configured to detect a mowing-blade rotation speed. When a mowing-blade rotation speed detected by the mowing-blade rotation speed sensor 25 reaches an upper limit value output by the upper limit value output unit 13c, the controller 13 can limit the rotation speed of the mowing-blade motor 15 so as to maintain the mowing-blade rotation speed at the upper limit value.

Accordingly, when the mowing-blade rotation speed reaches the upper limit value, the rotation speed of the mowing-blade motor 15 is limited so as to maintain the mowing-blade rotation speed at the upper limit value. Therefore, when the moving speed decreases and the mowing-blade rotation speed becomes excessive, the mowing-blade rotation speed can be reduced according to the moving speed. This makes it possible to prevent an excessive mowing-blade rotation speed in the low-speed range.

In addition, the lawn mower 1 further includes: an input device 16 configured to allow a driver to selectively input a mowing-blade rotation speed, and a controller 13 configured to control the mowing-blade motor 15. The controller 13 can control the rotation speed of the mowing-blade motor 15 so that a mowing-blade rotation speed becomes a mowing-blade rotation speed input by the input device 16, and when a mowing-blade rotation speed reaches an upper limit value output by the upper limit value output unit 13c, the controller 13 can limit the rotation speed of the mowing-blade motor 15 so as to maintain the mowing-blade rotation speed at the upper limit value.

Accordingly, since the rotation speed of the mowing-blade motor 15 is controlled so as to be the mowing-blade rotation speed input by the input device 16, the mowing-blade rotation speed can be set according to a command from the driver, and convenience can be improved. In addition, when the moving speed decreases and the mowing-blade rotation speed becomes excessive, the mowing-blade rotation speed can be decreased according to the moving speed. Accordingly, it is possible to set the mowing-blade rotation speed desired by the driver in the high-speed range, to prevent the mowing-blade rotation speed from becoming excessive in the low-speed range, and to achieve both execution of the mowing-blade rotation speed desired by the driver and prevention of excessive rotation of the mowing-blade.

In addition, the upper limit value output unit 13c can output the upper limit value of the mowing-blade rotation speed based on any one of a plurality of upper limit value output patterns in which the upper limit value of the mowing-blade rotation speed with respect to the moving speed of the lawn mower 1 is set.

Accordingly, since the upper limit value of the mowing-blade rotation speed is output based on any one of the plurality of upper limit output patterns, it is possible to perform rough mowing and finish mowing using the upper limit output patterns having different upper limit values of the mowing-blade rotation speed, and it is easy to achieve both the lawn mowing quality and the reduction of power consumption.

In addition, the lawn mower 1 further includes a mowing-blade height adjustment mechanism 17 capable of adjusting a mowing-blade height from the ground contact surface. When the mowing-blade height is adjusted to the highest non-lawn mowing height by the mowing-blade height adjustment mechanism 17, the controller 13 can control the mowing-blade motor 15 to stop the rotation of the mowing-blade.

Accordingly, when the mowing-blade height is adjusted to the non-lawn mowing height by the mowing-blade height adjustment mechanism 17, the rotation of the mowing-blade is stopped, so that power consumption can be further reduced.

In addition, the lawn mower 1 further includes: an input device 16 configured to allow a driver to selectively input a mowing-blade rotation speed, and a controller 13 configured to control the mowing-blade motor 15. The controller 13 can be configured to be switchable between the input priority mode in which the rotation speed of the mowing-blade motor 15 is controlled so as to be a mowing-blade rotation speed input by the input device 16 and the power saving mode in which the rotation speed of the mowing-blade motor 15 is limited so as to maintain the mowing-blade rotation speed at an upper limit value when the mowing-blade rotation speed reaches an upper limit value output by the upper limit value output unit.

Accordingly, since the controller 13 is configured to be switchable between the input priority mode and the power saving mode, it is possible to set two types of modes of the input priority mode and the power saving mode, perform rotation control of the mowing-blade according to the situation, and improve convenience.

In addition, the lawn mower 1 further includes a state detection unit configured to detect a state of the lawn mower different from the moving speed of the lawn mower. The upper limit value output unit 13c can correct the upper limit value of the mowing-blade rotation speed output by the upper limit value output unit 13c based on the detection result of the state of the lawn mower 1 detected by the state detection unit.

Accordingly, since the upper limit value of the mowing-blade rotation speed output by the upper limit value output unit 13c is corrected according to the state of the lawn mower different from the moving speed of the lawn mower 1, the upper limit value of the mowing-blade rotation speed can be output low according to the state of the lawn mower, and the excessive rotation of the mowing-blade rotation speed can be suppressed.

In addition, the lawn mower 1 further includes a load torque detection unit 34 configured to detect load torque on the mowing-blade motor 15. The upper limit value output unit 13c can output the upper limit value of the mowing-blade rotation speed output by the upper limit value output unit 13c lower as the load torque detected by the load torque detection unit 34 is smaller.

Accordingly, the lower the load torque of the mowing-blade motor 15, the lower the upper limit value of the mowing-blade rotation speed output by the upper limit value output unit 13c. Therefore, it is possible to suppress the mowing-blade rotation speed from being excessively rotated at a high speed in a situation where the mowing amount by the mowing-blade is small.

In addition, the lawn mower 1 further includes a mowing-blade height adjustment mechanism 17 capable of adjusting the mowing-blade height from the ground contact surface. The upper limit value output unit 13c can output the upper limit value of the mowing-blade rotation speed output by the upper limit value output unit 13c higher as the mowing-blade height adjusted by the mowing-blade height adjustment mechanism 17 is higher.

Accordingly, as the mowing-blade height adjusted by the mowing-blade height adjustment mechanism 17 is higher, the upper limit value of the mowing-blade rotation speed output by the upper limit value output unit 13c is output higher. Therefore, it is possible to prevent a decrease in the suction force of the lawn grass due to mowing with a higher mowing-blade height. Accordingly, the lawn grass can be mowed in a state of extending up and down, and the mowing quality can be maintained. It is possible to prevent deterioration in mowing quality. In addition, by setting the upper limit value of the rotation speed lower as the mowing height is lower, it is possible to suppress excessive high-speed rotation of the mowing-blade rotation speed while maintaining the mowing quality.

In addition, the upper limit value output unit 13c can output the upper limit value of the mowing-blade rotation speed output by the upper limit value output unit lower during turning or backward traveling as compared with during straight traveling.

Accordingly, the upper limit value output by the upper limit value output unit 13c is output lower during turning or backward movement than during straight traveling. Therefore, excessive rotation of the mowing-blade during turning or backward traveling can be suppressed, and power consumption can be suppressed.

In addition, the lawn mower 1 further includes: a grass clogging detection unit 35 configured to detect grass clogging of the mowing blade 14, and a controller 13 configured to control the mowing-blade motor 15. When grass clogging of the mowing blade 14 is detected by the grass clogging detection unit 35, the controller 13 can control the mowing-blade motor 15 by the grass clogging elimination mode for eliminating grass clogging.

Accordingly, when the grass clogging to the mowing blade 14 is detected, the mowing-blade motor 15 is controlled by the grass-clogging elimination mode. Therefore, when the grass clogging of the mowing blade 14 occurs, the grass clogging can be eliminated, and power consumption can be suppressed.

In addition, the lawn mower 1 further includes: a mowing-blade rotation speed sensor 25 configured to detect a mowing-blade rotation speed, a display device 31 configured to display information to the driver, and a controller 13 configured to control the display device 31. When the mowing-blade rotation speed detected by the mowing-blade rotation speed sensor 25 reaches an upper limit value output by the upper limit value output unit 13c, the controller 13 can control the display device 31 to display information indicating that the mowing-blade rotation speed has reached the upper limit value.

Accordingly, the display device 31 is controlled to display the information indicating that the mowing-blade rotation speed has reached the upper limit value. Therefore, by displaying that the mowing-blade rotation speed is in an excessive state, it is possible to prompt the driver to reduce the mowing-blade rotation speed and contribute to the reduction in power consumption.

In addition, the lawn mower 1 further includes: a load state detection unit 34 configured to detect the load state of the mowing-blade motor 15, a display device 31 configured to display information to the driver, and a controller 13 configured to control the display device 31. When it is determined that the load state of the mowing-blade motor 15 detected by the load state detection unit 34 is abnormal, the controller 13 can control the display device 31 to display information indicating the grass-clogging state in which grass-clogging of the mowing blade 14 has occurred.

Accordingly, when it is determined that the load state of the mowing-blade motor 15 is abnormal, the display device 31 is controlled to display the information indicating the grass-clogging state. Therefore, the display of the grass-clogging state can prompt the driver to eliminate the grass-clogging, which can contribute to the reduction in power consumption.

In addition, a control device of the lawn mower 1 according to the present embodiment includes: a mowing-blade drive source 15 configured to rotationally drive a mowing blade 14 for lawn mowing; and a controller 13 including an upper limit value output unit 13c configured to output an upper limit value of a mowing-blade rotation speed, the controller being configured to control the mowing-blade drive source 15. The controller 13 can control the mowing-blade drive source 15 so that an upper limit value of a mowing-blade rotation speed is lower as the moving speed of the lawn mower 1 is lower based on the upper limit value of the mowing-blade rotation speed output by the upper limit value output unit 13c.

Accordingly, the mowing-blade drive source 15 is controlled based on the upper limit value of the mowing-blade rotation speed so that the lower the moving speed of the lawn mower 1, the lower the upper limit value of the mowing-blade rotation speed. Therefore, the mowing-blade rotation speed can be easily adjusted to be the upper limit value or less. Since the upper limit value of the mowing-blade rotation speed is set to be low when the moving speed is low, it is possible to prevent the mowing-blade rotation speed from excessive rotation at a high speed in a situation where the moving speed is low. This can prevent influence on lawn mowing quality and reduce unnecessary power consumption due to mowing-blade rotation.

A display system of the lawn mower 1 according to the present embodiment includes: a display device 31 configured to display information to the driver; and a controller 13 including an upper limit value output unit 13c configured to output the upper limit value of the mowing-blade rotation speed, the controller configured to control the display device 31. The controller 13 can control the display device 31 so that the upper limit value of the mowing-blade rotation speed is lower as the moving speed of the lawn mower 1 is lower based on the upper limit value of the mowing-blade rotation speed output by the upper limit value output unit 13c.

Accordingly, the display device 31 is controlled based on the upper limit value of the mowing-blade rotation speed so that the lower the moving speed of the lawn mower 1, the lower the upper limit value of the mowing-blade rotation speed. Therefore, the mowing-blade rotation speed can be easily adjusted to be the upper limit value or less. Since the upper limit value of the mowing-blade rotation speed is set to be low when the moving speed is low, it is possible to prevent the mowing-blade rotation speed from excessive rotation at a high speed in a situation where the moving speed is low. This can prevent influence on lawn mowing quality and reduce unnecessary power consumption due to mowing-blade rotation.

The present disclosure is not limited to the illustrated embodiments, and various improvements and design changes can be made without departing from the gist of the present disclosure.

## Claims

1. A lawn mower comprising:
a vehicle main body;
a traveling motor provided in the vehicle main body, the traveling motor being configured to drive a traveling drive wheel;
a mowing-blade motor provided in the vehicle main body, the mowing-blade motor being configured to rotationally drive a mowing-blade for lawn mowing; and
an upper limit value output unit configured to output an upper limit value of a mowing-blade rotation speed,
wherein the upper limit value output unit outputs an upper limit value of a mowing-blade rotation speed lower as a moving speed of a lawn mower is lower.

2. The lawn mower according to claim 1, further comprising:
a display device; and
a controller configured to control at least one of the mowing-blade motor and the display device,
wherein the controller controls at least one of the mowing-blade motor and the display device based on an upper limit value of a mowing-blade rotation speed output by the upper limit value output unit.

3. The lawn mower according to claim 1 or 2, further comprising:
a controller configured to control the mowing-blade motor; and
a mowing-blade rotation speed sensor configured to detect a mowing-blade rotation speed,
wherein when the mowing-blade rotation speed detected by the mowing-blade rotation speed sensor reaches an upper limit value output by the upper limit value output unit, the controller limits a rotation speed of the mowing-blade motor so as to maintain a mowing-blade rotation speed at the upper limit value.

4. The lawn mower according to any one of claims 1 to 3, further comprising:
an input device configured to allow a driver to selectively input a mowing-blade rotation speed; and
a controller configured to control the mowing-blade motor,
wherein the controller controls a rotation speed of the mowing-blade motor so that a mowing-blade rotation speed becomes a mowing-blade rotation speed input by the input device, and when the mowing-blade rotation speed reaches an upper limit value output by the upper limit value output unit, the controller limits a rotation speed of the mowing-blade motor so as to maintain a mowing-blade rotation speed at the upper limit value.

5. The lawn mower according to any one of claims 1 to 4, wherein the upper limit value output unit outputs an upper limit value of a mowing-blade rotation speed based on any one of a plurality of upper limit value output patterns in which an upper limit value of a mowing-blade rotation speed with respect to a moving speed of a lawn mower is set.

6. The lawn mower according to any one of claims 1 to 5, further comprising a mowing-blade height adjustment mechanism capable of adjusting a mowing-blade height from a ground contact surface,
wherein when the mowing-blade height is adjusted to a highest non-lawn mowing height by the mowing-blade height adjustment mechanism, the controller controls the mowing-blade motor to stop rotation of the mowing-blade.

7. The lawn mower according to any one of claims 1 to 6, further comprising:
an input device configured to allow a driver to selectively input a mowing-blade rotation speed; and
a controller configured to control the mowing-blade motor,
wherein the controller is configured to be switchable between an input priority mode in which a rotation speed of a mowing-blade motor is controlled so as to be a mowing-blade rotation speed input by the input device and a power saving mode in which a rotation speed of a mowing-blade motor is limited so as to maintain a mowing-blade rotation speed at an upper limit value when a mowing-blade rotation speed reaches an upper limit value output by the upper limit value output unit.

8. The lawn mower according to any one of claims 1 to 7, further comprising a state detection unit configured to detect a state of a lawn mower different from a moving speed of a lawn mower,
wherein the upper limit value output unit corrects an upper limit value of a mowing-blade rotation speed output by the upper limit value output unit based on a detection result of a state of a lawn mower detected by the state detection unit.

9. The lawn mower according to any one of claims 1 to 8, further comprising a load torque detection unit configured to detect load torque on the mowing-blade motor,
wherein the upper limit value output unit outputs an upper limit value of a mowing-blade rotation speed output by the upper limit value output unit lower as load torque detected by the load torque detection unit is smaller.

10. The lawn mower according to any one of claims 1 to 9, further comprising a mowing-blade height adjustment mechanism capable of adjusting a mowing-blade height from a ground contact surface,
wherein the upper limit value output unit outputs an upper limit value of a mowing-blade rotation speed output by the upper limit value output unit higher as a mowing-blade height adjusted by the mowing-blade height adjustment mechanism is higher.

11. The lawn mower according to any one of claims 1 to 10, wherein the upper limit value output unit outputs an upper limit value of a mowing-blade rotation speed output by the upper limit value output unit lower during turning or backward traveling as compared with during straight traveling.

12. The lawn mower according to any one of claims 1 to 11, further comprising:
a grass clogging detection unit configured to detect grass clogging of a mowing-blade; and
a controller configured to control the mowing-blade motor,
wherein when grass clogging of a mowing-blade is detected by the grass clogging detection unit, the controller controls the mowing-blade motor by a grass clogging elimination mode for eliminating grass clogging.

13. The lawn mower according to any one of claims 1 to 12, further comprising:
a mowing-blade rotation speed sensor configured to detect a mowing-blade rotation speed;
a display device configured to display information to a driver; and
a controller configured to control the display device,
wherein when a mowing-blade rotation speed detected by the mowing-blade rotation speed sensor reaches an upper limit value output by the upper limit value output unit, the controller controls the display device to display information indicating that a mowing-blade rotation speed has reached the upper limit value.

14. The lawn mower according to any one of claims 1 to 13, further comprising:
a load state detection unit configured to detect a load state of the mowing-blade motor;
a display device configured to display information to a driver; and
a controller configured to control the display device,
wherein when it is determined that a load state of the mowing-blade motor detected by the load state detection unit is abnormal, the controller controls the display device to display information indicating a grass-clogging state in which grass-clogging of a mowing-blade has occurred.

15. A method for controlling a lawn mower comprising a mowing-blade drive source configured to rotationally drive a mowing-blade for lawn mowing and an upper limit value output unit configured to output an upper limit value of a mowing-blade rotation speed, the method comprising:
controlling the mowing-blade drive source so that an upper limit value of a mowing-blade rotation speed is lower as a moving speed of a lawn mower is lower based on an upper limit value of a mowing-blade rotation speed output by the upper limit value output unit.
